# EUROPEAN PATENT SPECIFICATION

(11) **EP 2 570 608 B1**
(45) Date of publication and mention of the grant of the patent: **04.07.2018**
(21) Application number: 12169252.9
(22) Date of filing: 24.05.2012
(51) Int. Cl.: F01D 5/28, F01D 5/34, F01D 11/00, C04B 35/80, C04B 37/00

(54) **Ceramic matrix composite rotor module for a gas turbine engine, corresponding turbine assembly and method of assembling**
Rotorbaugruppe aus keramischem Faserverbundwerkstoff für ein Gasturbinentriebwerk, zugehörige Turbinenanordnung und Montageverfahren
Ensemble de rotor en composite à matrice céramique pour moteur à turbine à gaz, agencement de turbine et procédé d'assemblage associés

(30) Priority: 26.05.2011 US 201113116129
(43) Date of publication of application: 20.03.2013
(73) Proprietor: United Technologies Corporation, Farmington, CT 06032 (US)
(72) Inventor: Suciu, Gabriel L., Glastonbury, CT Connecticut 06033 (US); Alvanos, Ioannis, West Springfield, MA Massachusetts 01089 (US); Merry, Brian D., Andover, CT Connecticut 06232 (US)
(74) Representative: Dehns

(56) References cited:
- EP-A2- 1 536 101
- JP-A- 2002 061 502
- US-A- 5 897 920
- US-A1- 2002 108 376
- US-A1- 2007 297 897
- US-B1- 6 203 273
- Press Release: "GE Aviation Moving To Apply Ceramic Matrix Composites to the Heart of Future Engines", GE Aviation Website, 9 March 2009 (2009-03-09), pages 1-1, XP055031952, Evendale, OHIO, USA Retrieved from the Internet: URL:http://www.geaviation.com/press/other/ other_20090309.html [retrieved on 2012-07-05]

## Description

### BACKGROUND

The present disclosure relates to a gas turbine engine, and more particularly to Ceramic Matrix Composites (CMC) components therefor.

The turbine section of a gas turbine engine operates at elevated temperatures in a strenuous, oxidizing type of gas flow environment and is typically manufactured of high temperature superalloys. Turbine rotor assemblies often include a multiple of rotor disks that are typically fastened together by bolts, tie rods and other fasteners. Such fasteners increase weight not just from the fasteners themselves but from the extra material in the area which support the fasteners.

EP 1 536 101 A2 discloses a rotor module according to the preamble of claim 1 and a method according to the preamble of claim 12.

US 2002/0108376 A1 discloses a thermal management system for turbomachinery.

Press release: "GE Aviavtion Moving to Apply Ceramic Matrix Composites to the Heart of Future Engines", 9 March 2009, pages 1-1, XP055031952 discloses engines utilizing CMC components.

US 2007/0297897 A1 discloses split knife edge seals.

US 5897920 discloses a method of providing an abrasive coating on a metallic structure.

JP 2002061502 A discloses a prior art bladed disk.

### SUMMARY

According to the present invention there is provided a rotor module as set forth in claim 1 and a method as set forth in claim 12.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine; and
Figure 2 is an enlarged sectional view of a section of the gas turbine engine.

### DETAILED DESCRIPTION

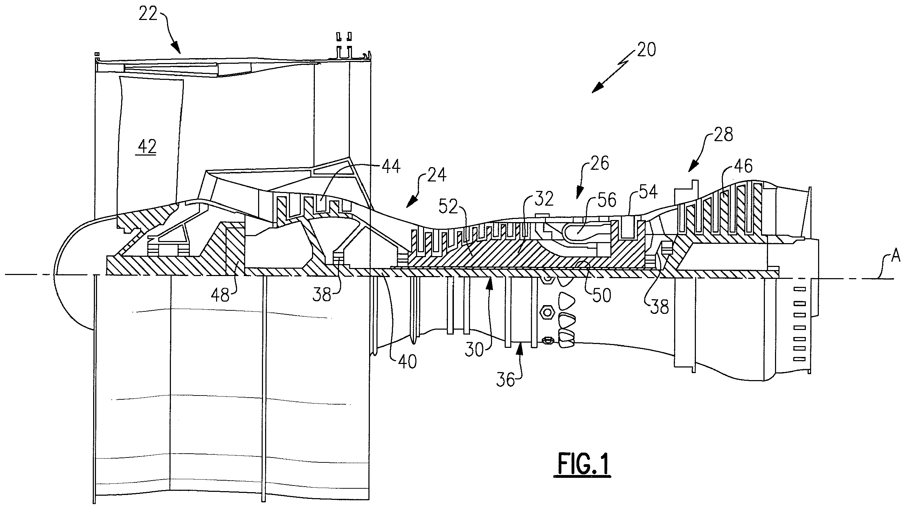

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed with fuel and burned in the combustor 56, then expanded over the high pressure turbine 54 and low pressure turbine 46. The turbines 54, 46 rotationally drive the respective low speed spool 30 and high speed spool 32 in response to the expansion.

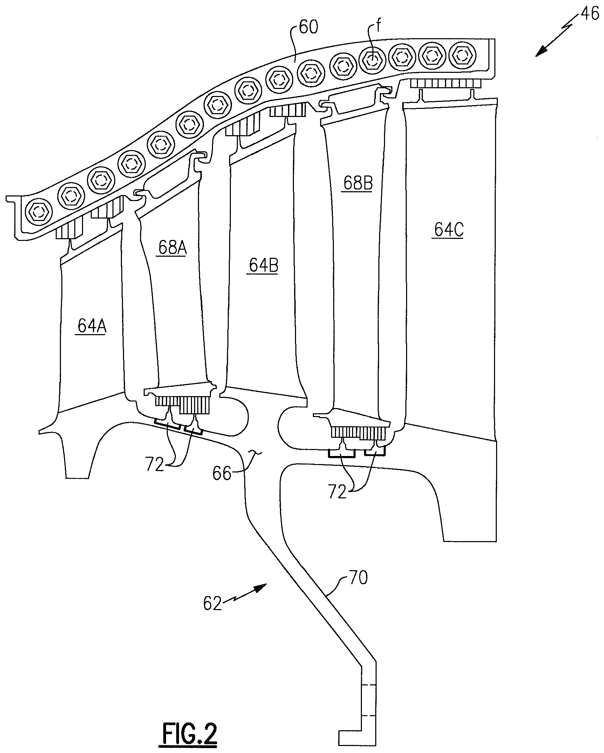

With reference to Figure 2, the low pressure turbine 46 generally includes a case 60 with a multiple of (at least two) low pressure turbine stages. In the disclosed non-limiting embodiment, the case 60 is manufactured of a ceramic matrix composite (CMC) material or metal superalloy. It should be understood that examples of CMC material for all componentry discussed herein may include, but are not limited to, for example, S200 and SiC/SiC. It should be also understood that examples of metal superalloy for all componentry discussed herein may include, but are not limited to, for example, INCO 718 and Waspaloy.

A rotor module 62 includes multiple rows of CMC airfoils 64A, 64B, 64C which extend from a common CMC drum 66. The rows of airfoils 64A, 64B, 64C are interspersed with CMC vane structures 68A, 68B to form a respective number of LPT stages. The fibers in CMC of each rotor stage are extended to join each stage and hybrid stages formed of a multiple of materials to increase strength in highly loaded areas, i.e. hubs, winged appendages, etc. It should be understood that each of the stages may include a full hoop ring-strut ring construction. It should be understood that the term full hoop is defined herein as an uninterrupted member such that the vanes do not pass through apertures formed therethrough Although depicted as a low pressure turbine in the disclosed embodiment, it should be understood that the concepts described herein are not limited to use with low pressure turbine as the teachings may be applied to other sections such as high pressure turbine, high pressure compressor, low pressure compressor and intermediate pressure turbine and intermediate pressure turbine of a three-spool architecture gas turbine engine.

The rotor module 62 further defines a radially inwardly extending mount 70 which collectively mounts the LPT rotor module 62 to the inner rotor shaft 40 through a ring of fasteners or other such interface (Figure 1). The radially inwardly extending mount 70 may extend generally from an axially central location of the common CMC drum 66 adjacent airfoil row 64B. That is, the rotor module 62 is a unitary component which integrates multiple rows of airfoils 64A, 64B, 64C with the common CMC drum 66 without the heretofor utilized fir tree attachments otherwise conventionally required for each blade.

The rotor module 62 defines a single unitary CMC structure which may additionally receive separate, typically more geometrically complicated, features such as knife edge seals 72. The knife edge seals 72 and other such features may be manufactured of a monolithic ceramic or metal alloy material different from the CMC material. The knife edge seals 72 are bonded into the rotor module 62 or otherwise mounted therein.

Hardware complexity and weight are significantly decreases with a unitary rotor module 62. The rotor module 62 eliminates inter-stage fasteners along with any added material mass required to lower stresses in the fastener region. The rotor module 62 may require a split low pressure case 60 for assembly. That is, since the rotor module 62 is an integral module, the case 60 must be assembled around the rotor module 62. The case 60 may be assembled from, for example, two longitudinal halves which are assembled together with a multiple of fasteners f.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A rotor module (62) for a gas turbine engine (20) comprising:
a common drum (66) defined about an axis (A); and
a multiple of airfoil rows (64A,64B,64C) which extend from said common drum (66),
**characterised in that**:
said common drum (66) and said multiple of airfoil rows (64A, 64B, 64C) are formed of CMC;
said rotor module (62) is a unitary component which integrates said multiple of CMC airfoil rows (64A, 64B, 64C) with said common CMC drum (66); and
fibers in CMC of each of said multiple of airfoil rows (64A, 64B, 64C) are extended to join each row.

2. The rotor module (62) as recited in claim 1, further comprising a split case (60) within which said rotor module (62) rotates.

3. A turbine assembly for a gas turbine engine (20), the turbine assembly comprising a rotor module (62) as recited in claim 2.

4. The rotor module (62) as recited in claims 1 or 2, wherein said multiple of CMC airfoil rows (64A,64B,64C) are within a compressor section (24) of the gas turbine engine (20).

5. The rotor module (62) as recited in claims 1 or 2, wherein said multiple of CMC airfoil rows (64A, 64B, 64C) are within a high pressure compressor (52) section of the gas turbine engine (20).

6. The rotor module (62) as recited in claims 1, 2 or 3, wherein said multiple of CMC airfoil rows (64A, 64B, 64C) are within a turbine section (28) of the gas turbine engine (20), optionally within a low pressure turbine section (46) of the gas turbine engine (20).

7. The rotor module (62) or turbine assembly as recited in any preceding claim, further comprising a monolithic ceramic feature (72) mounted to said common CMC drum (66).

8. The rotor module (62) or turbine assembly as recited in any preceding claim, wherein said monolithic ceramic feature is a knife edge seal (72).

9. The rotor module (62) or turbine assembly as recited in any of claims 1 to 6, further comprising a metallic alloy feature (72) mounted to said common CMC drum (66).

10. The rotor module (62) or turbine assembly as recited in claim 9, wherein said metallic alloy feature is a knife edge seal (72).

11. The rotor module (62) or turbine assembly of any preceding claim, wherein the common drum (66) and the multiple of airfoil rows (64A, 64B, 64C) form a plurality of rotor stages, and the fibers in the CMC of each rotor stage are extended to join each stage.

12. A method of assembling a turbine assembly for a gas turbine engine (20) comprising:
assembling a split case (60) around a common drum (66) defined about an axis (A), a multiple of airfoil rows (64A,64B,64C) extending from the common drum (66), **characterised in that**:
said common drum (66) and said multiple of airfoil rows (64A, 64B, 64C) are formed of CMC;
said rotor module (62) is a unitary component which integrates said multiple of CMC airfoil rows (64A, 64B, 64C) with said common CMC drum (66); and
fibers in CMC of each of said multiple of airfoil rows (64A, 64B, 64C) are extended to join each row.

13. The method as recited in claim 12, further comprising assembling two longitudinal halves of the split case with a multiple of fasteners (f).

## Patentansprüche

1. Rotorbaugruppe (62) für ein Gasturbinentriebwerk (20), umfassend:
eine gemeinsame Trommel (66), die um eine Achse (A) definiert ist; und
eine Vielzahl von Tragflächenreihen (64A, 64B, 64C), die sich von der gemeinsamen Trommel (66) erstreckt,
**dadurch gekennzeichnet, dass**:
die gemeinsame Trommel (66) und die Vielzahl von Tragflächenreihen (64A, 64B, 64C) aus CMC gebildet sind;
die Rotorbaugruppe (62) eine einteilige Komponente ist, die die Vielzahl von CMC-Tragflächenreihen (64A, 64B, 64C) mit der gemeinsamen CMC-Trommel (66) integriert; und
Fasern in CMC von jeder aus der Vielzahl von Tragflächenreihen (64A, 64B, 64C) erweitert sind, um sich jeder Reihe anzuschließen.

2. Rotorbaugruppe (62) nach Anspruch 1, ferner umfassend ein Spaltgehäuse (60), innerhalb dessen sich die Rotorbaugruppe (62) dreht.

3. Turbinenanordnung für ein Gasturbinentriebwerk (20), wobei die Turbinenanordnung eine Rotorbaugruppe (62) nach Anspruch 2 umfasst.

4. Rotorbaugruppe (62) nach Anspruch 1 oder 2, wobei sich die Vielzahl von CMC-Tragflächenreihen (64A, 64B, 64C) innerhalb eines Verdichterabschnitts (24) des Gasturbinentriebwerks (20) befindet.

5. Rotorbaugruppe (62) nach Anspruch 1 oder 2, wobei sich die Vielzahl von CMC-Tragflächenreihen (64A, 64B, 64C) innerhalb eines Hochdruckverdichterabschnitts (52) des Gasturbinentriebwerks (20) befindet.

6. Rotorbaugruppe (62) nach Anspruch 1, 2 oder 3, wobei sich die Vielzahl von CMC-Tragflächenreihen (64A, 64B, 64C) innerhalb eines Turbinenabschnitts (28) des Gasturbinentriebwerks (20) befindet, optional innerhalb eines Niedrigdruckturbinenabschnitts (46) des Gasturbinentriebwerks (20) .

7. Rotorbaugruppe (62) oder Turbinenanordnung nach einem vorhergehenden Anspruch, ferner umfassend ein monolithisches Keramikmerkmal (72), das an der gemeinsamen CMC-Trommel (66) angebracht ist.

8. Rotorbaugruppe (62) oder Turbinenanordnung nach einem vorhergehenden Anspruch, wobei das monolithische Keramikmerkmal eine Schneidkantendichtung (72) ist.

9. Rotorbaugruppe (62) oder Turbinenanordnung nach einem der Ansprüche 1 bis 6, ferner umfassend ein Metalllegierungsmerkmal (72), das an der gemeinsamen CMC-Trommel (66) angebracht ist.

10. Rotorbaugruppe (62) oder Turbinenanordnung nach Anspruch 9, wobei das Metalllegierungsmerkmal eine Schneidkantendichtung (72) ist.

11. Rotorbaugruppe (62) oder Turbinenanordnung nach einem vorhergehenden Anspruch, wobei die gemeinsame Trommel (66) und die Vielzahl von Tragflächenreihen (64A, 64B, 64C) eine Vielzahl von Rotorstufen bilden und die Fasern in dem CMC jeder Rotorstufe erweitert sind, um sich jeder Stufe anzuschließen.

12. Montageverfahren für eine Turbinenanordnung für ein Gasturbinentriebwerk (20), umfassend:
Montieren eines Spaltgehäuses (60) um eine gemeinsame Trommel (66), die um eine Achse (A) definiert ist, wobei sich eine Vielzahl von Tragflächenreihen (64A, 64B, 64C) von der gemeinsamen Trommel (66) erstreckt;
**dadurch gekennzeichnet, dass**:
die gemeinsame Trommel (66) und die Vielzahl von Tragflächenreihen (64A, 64B, 64C) aus CMC gebildet sind;
die Rotorbaugruppe (62) eine einteilige Komponente ist, die die Vielzahl von CMC-Tragflächenreihen (64A, 64B, 64C) mit der gemeinsamen CMC-Trommel (66) integriert; und
Fasern in CMC von jeder aus der Vielzahl von Tragflächenreihen (64A, 64B, 64C) erweitert sind, um sich jeder Reihe anzuschließen.

13. Verfahren nach Anspruch 12, ferner umfassend das Montieren von zwei länglichen Hälften des Spaltgehäuses mit einer Vielzahl von Befestigungen (f).

## Revendications

1. Ensemble de rotor (62) pour un moteur à turbine à gaz (20) comprenant :
un tambour commun (66) défini autour d'un axe (A) ; et
un multiple de rangées de profils aérodynamiques (64A, 64B, 64C) qui s'étendent dudit tambour commun (66),
**caractérisé en ce que** :
ledit tambour commun (66) et ledit multiple de rangées de profils aérodynamiques (64A, 64B, 64C) sont formés de CMC ;
ledit ensemble de rotor (62) est un composant unitaire qui intègre ledit multiple de rangées de profils aérodynamiques CMC (64A, 64B, 64C) audit tambour CMC commun (66) ; et
des fibres en CMC de chacun dudit multiple de rangées de profils aérodynamiques (64A, 64B, 64C) sont étendues pour joindre chaque rangée.

2. Ensemble de rotor (62) selon la revendication 1, comprenant en outre un boîtier fendu (60) à l'intérieur duquel ledit ensemble de rotor (62) tourne.

3. Agencement de turbine pour un moteur à turbine à gaz (20), l'agencement de turbine comprenant un ensemble de rotor (62) selon la revendication 2.

4. Ensemble de rotor (62) selon les revendications 1 ou 2, dans lequel ledit multiple de rangées de profils aérodynamiques CMC (64A, 64B, 64C) sont à l'intérieur d'une section compresseur (24) du moteur à turbine à gaz (20).

5. Ensemble de rotor (62) selon les revendications 1 ou 2, dans lequel ledit multiple de rangées de profils aérodynamiques CMC (64A, 64B, 64C) sont à l'intérieur d'une section compresseur à haute pression (52) du moteur à turbine à gaz (20) .

6. Ensemble de rotor (62) selon les revendications 1, 2 ou 3, dans lequel ledit multiple de rangées de profils aérodynamiques CMC (64A, 64B, 64C) sont à l'intérieur d'une section turbine (28) du moteur à turbine à gaz (20), en option à l'intérieur d'une section turbine à faible pression (46) du moteur à turbine à gaz (20).

7. Ensemble de rotor (62) ou agencement de turbine selon une quelconque revendication précédente, comprenant en outre un élément en céramique monolithique (72) monté sur ledit tambour CMC commun (66).

8. Ensemble de rotor (62) ou agencement de turbine selon une quelconque revendication précédente, dans lequel ledit élément en céramique monolithique est un joint d'étanchéité de couteau (72).

9. Ensemble de rotor (62) ou agencement de turbine selon l'une quelconque des revendications 1 à 6, comprenant en outre un élément en alliage métallique (72) monté sur ledit tambour CMC commun (66).

10. Ensemble de rotor (62) ou agencement de turbine selon la revendication 9, dans lequel ledit élément en alliage métallique est un joint d'étanchéité de couteau (72).

11. Ensemble de rotor (62) ou agencement de turbine selon une quelconque revendication précédente, dans lequel le tambour commun (66) et le multiple de rangées de profils aérodynamiques CMC (64A, 64B, 64C) forment une pluralité d'étages de rotor, et les fibres dans le CMC de chaque étage de rotor sont étendues pour joindre chaque étage.

12. Procédé d'assemblage d'un agencement de turbine pour un moteur à turbine à gaz (20) comprenant :
l'assemblage d'un boîtier fendu (60) autour d'un tambour commun (66) défini autour d'un axe (A), un multiple de rangées de profils aérodynamiques (64A, 64B, 64C) s'étendant du tambour commun (66),
**caractérisé en ce que** :
ledit tambour commun (66) et ledit multiple de rangées de profils aérodynamiques (64A, 64B, 64C) sont formés de CMC ;
ledit ensemble de rotor (62) est un composant unitaire qui intègre ledit multiple de rangées de profils aérodynamiques CMC (64A, 64B, 64C) audit tambour CMC commun (66) ; et
des fibres en CMC de chacun dudit multiple de rangées de profils aérodynamiques (64A, 64B, 64C) sont étendues pour joindre chaque rangée.

13. Procédé selon la revendication 12, comprenant en outre l'assemblage de deux moitiés longitudinales du boîtier fendu avec un multiple d'éléments de fixation (f).
